# EUROPÄISCHE PATENTSCHRIFT

(11) **EP 2 044 671 B1**
(45) Veröffentlichungstag und Bekanntmachung des Hinweises auf die Patenterteilung: **06.06.2012**
(21) Anmeldenummer: 07786937.8
(22) Anmeldetag: 29.06.2007
(51) Int. Cl.: H02K 1/02, H02K 1/27

(54) **ROTOR FÜR EINE ELEKTRISCHE MASCHINE, SOWIE HERSTELLUNGSVERFAHREN EINES SOLCHEN**
ROTOR FOR AN ELECTRIC MACHINE AND PRODUCTION METHOD THEREOF
ROTOR POUR UNE MACHINE ELECTRIQUE, AINSI QUE PROCEDE DE FABRICATION D'UN TEL ROTOR

(30) Priorität: 12.07.2006 DE 102006032215
(43) Veröffentlichungstag der Anmeldung: 08.04.2009
(73) Patentinhaber: Robert Bosch GmbH, 70442 Stuttgart (DE)
(72) Erfinder: EVANS, Steven Andrew, 77813 Buehl (DE)
(86) Internationale Anmeldenummer: PCT/EP2007/056574
(87) Internationale Veröffentlichungsnummer: WO 2008/006719

(56) Entgegenhaltungen:
- US-A- 5 684 352

## Beschreibung

### Stand der Technik

Die vorliegende Erfindung betrifft einen Rotor für eine elektrische Maschine, insbesondere eine bürstenlose Permanentmagnet-Folgepol-Maschine, der einen Kern aufweist, der aus Lamellenblechen besteht, welche auf einer Motorwelle angeordnet sind.

Bürstenlose Permanentmagnet-Folgepol-Maschinen werden weithin in Anwendungen eingesetzt, bei denen keine hohen Kosten entstehen sollen, z.B. im Automobilbereich. Bei Folgepol-Maschinen ist die Anzahl der Permanentmagnete in dem Elektromotor reduziert, um die Produktions- und Herstellungskosten zu vermindern, ohne die Anzahl der Pole und das Verhältnis der Leistung zum Gewicht zu reduzieren. Dies wird z.B. dadurch erreicht, dass anstelle von Südpol-Permanentmagneten weichmagnetische Polschuhe verwendet werden, wobei die Nordpol-Permanentmagnete mit doppelter Dicke ausgeführt werden, um die magnetomotorische Kraft in dem Rotor der Maschine konstant zu halten, sowie eine Reduktion des d-Achsen-Flusses und eine Verminderung des von der Maschine ausgegebenen Drehmoments zu verhindern. Der aus den weichmagnetischen Südpolen austretende Fluss wird aufgrund der Repulsion von polähnlichem Fluss von den Nordpol-Permanentmagneten erzeugt.

Die Herstellungskosten der Permanentmagnete pro kg Material sind bei einer Folgepol-Maschine aufgrund der reduzierten Anzahl von Permanentmagnet-Oberflächen, die bearbeitetet (z.B. drahterodiert) werden müssen, geringer, da lediglich die halbe Anzahl von Permanentmagneten in dem Elektromotor vorhanden sind. Ebenso ist der Zusammenbau des Rotors einfacher und die Herstellungskosten sind geringer, da nur die halbe Anzahl von Permanentmagneten in den Rotor-Lamellenstapel eingebaut werden müssen.

Bei Folgepol-Maschinen besteht jedoch der Nachteil, dass entlang der Motorwelle der Maschine ein Flussverlust auftritt, wenn eine magnetische Stahlwelle verwendet wird, was üblicherweise der Fall ist. Der Fluss des Südpols, der von den Nordpol-Permanentmagneten erzeugt wird, tritt nicht vollständig aus den weichmagnetischen Südpol-Polschuhen aus, an denen dieser den Luftspalt überbrückt und die Windungen verbindet, um ein Drehmoment zu erzeugen. Ein bestimmter Betrag dieses Flusses fließt in die Welle und trägt demzufolge nicht zur Erzeugung von Drehmoment bei, wodurch eine Reduzierung des Verhältnisses von Leistung zu Gewicht der Maschine herbeigeführt wird.

Das Problem des Streuflusses in der Welle tritt bei Maschinen, die größere Spaltbreiten aufweisen, stärker auf, z.B. bei Maschinen, die in integrierten Wasserpumpen in Kraftfahrzeugen verwendet werden. Bei diesen Elektromotoren kann die magnetische Spaltbreite im Vergleich zu etwa 0,5 mm in normalen Elektromotoren typischerweise 2,3 mm betragen. Die magnetische Spaltbreite ist so groß, da
(a) der Rotor, der als Nassläufer in dem zu pumpenden Wasser läuft, gekapselt werden muss, z.B. in einem Gehäuse aus rostfreiem Stahl, das typischerweise 0,2 mm dick ist, um den Rotor-Lamellenstapel und die Permanentmagnete vor Korrosion zu schützen, was insbesondere wichtig ist, wenn die Permanentmagnete aus Neodym-Eisen-Bor (NdFeB) hergestellt sind;
(b) der Rotor von dem trockenen Stator durch eine Plastikabdeckung getrennt ist, welche den Rotor umfasst, wobei diese Abdeckung dick genug sein muss, um unter dem in der Pumpe herrschenden Druck nicht zu verbiegen, und typischerweise 1,2 mm dick ist; und
(c) ein mechanischer Spalt zwischen dem aus rostfreiem Stahl hergestellten Rotorgehäuse und der Innenwand der Plastikabdeckung, in dem das Wasser fließt, minimal 0,8 mm breit sein muss, da das Wasser Partikel mit einer Größe von bis zu 0,6 mm beinhalten kann, welche durch die Pumpe laufen müssen, ohne ein Blockieren des Rotors und somit ein Stoppen des Pumpens zu bewirken.

Dieser große magnetische Spalt erzeugt eine magnetische Reluktanz in dem Spalt, die höher als normal ist, wodurch ein Anteil des Rotorflusses, der in einem Weg einer geringeren Reluktanz durch die Welle des Elektromotors verläuft, im Vergleich mit der Überbrückung des Spalts mit hoher Reluktanz zunimmt. Der Flussverlust durch die Welle von kleinen integrierten Pumpen kann typischerweise bis zu 13 % betragen. Um diesen Streuflussverlust zu kompensieren, muss entweder die Länge des Elektromotors bis zu etwa 13 % erhöht werden oder es muss eine nichtmagnetische Welle aus rostfreiem Stahl verwendet werden. Beide Lösungen erhöhen die Kosten des Elektromotors beträchtlich.

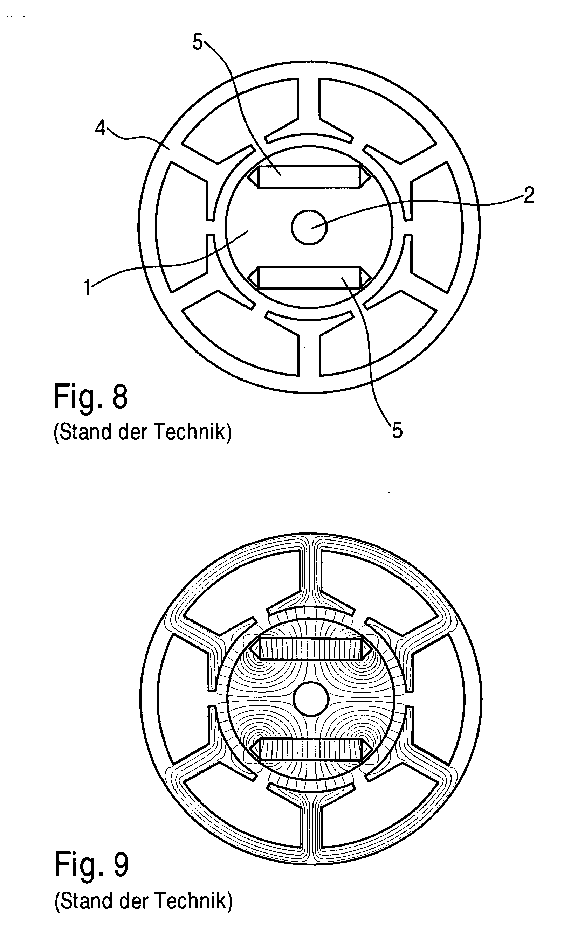

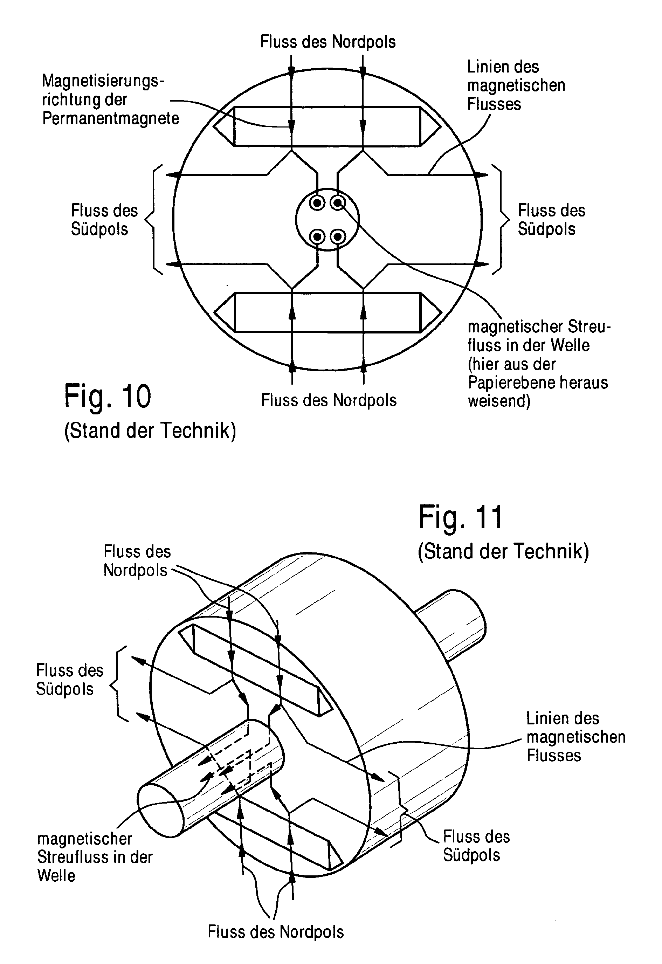

Zur Erläuterung zeigt Figur 8 einen zweidimensionalen Querschnitt eines kleinen bürstenlosen vierpoligen drei-phasen Permanentmagnet-Elektromotors mit sechs Zähnen mit einer vergrabenen NdFeB-Permanentmagnet-Folgepol-Rotoranordnung, also die Aufsicht auf ein Lamellenblech 1 des aus Lamellenblechen bestehenden Kerns und ein Lamellenblech 4 des aus Lamellenblech bestehenden Stator. Weiter sind zwei Permanentmagnete 5 ebenfalls im Schnitt dargestellt. Figur 9 zeigt das zweidimensionale Magnetfeld in der Maschine, das besteht, wenn diese nicht angeregt wird, welches unter Verwendung einer Analyse mit finiten Elementen unter der Annahme berechnet wurde, dass die Motorwelle nicht magnetisch ist. In den Figuren 8 und 9 sind der Einfachheit halber keine Phasenwicklungen gezeigt. Die Figur 10 zeigt eine schematische zweidimensionale Darstellung des in Figur 9 gezeigten in dem Rotor bestehenden Magnetfelds, wenn die Motorwelle magnetisch ist. Die Linien des magnetischen Flusses, die das vierpolige Feld erzeugen, können in der Figur zusammen mit dem magnetischen Streufluss in der Welle deutlich erkannt werden. Figur 11 zeigt eine schematische dreidimensionale Darstellung des magnetischen Feldes im Rotor, wobei der in der Welle fließende magnetische Streufluss deutlich erkannt werden kann. Dieser Streufluss vermindert das vierpolige Feld und reduziert dadurch den Fluss im Spalt, das Drehmoment sowie das Verhältnis der Leistung zum Gewicht des Elektromotors.

Mit der US 5 684 352 A ist eine elektrische Maschine mit einem Rotor bekannt geworden, der axiale Öffnungen für die Aufnahme von Permanentmagneten aufweist. Dabei weisen die Permanentmagnete bezüglich der Radialrichtung oder bezüglich der Umfangsrichtung eine maximale Länge auf. An den Enden der maximalen Erstreckung der Permanentmagnete sind hierbei Bereiche mit nichtmagnetischen Eigenschaften in den Rotorlamellen ausgebildet.

### Vorteile der Erfindung

Der erfindungsgemäße Rotor mit den Merkmalen des Patentanspruchs 1 weist demgegenüber den Vorteil auf, dass der in der Motorwelle fließende Streufluss auch bei Verwendung einer magnetischen Motorwelle minimiert bzw. verhindert wird, wodurch der Fluss im Spalt, das Drehmoment und das Verhältnis der Leistung zum Gewicht des Elektromotors nicht reduziert werden. Dies wird erfindungsgemäß dadurch erreicht, dass die Lamellenbleche des Kerns des Rotors aus einem Zwei-Zustands-Stahl bestehen und in einem inneren Bereich, in dem die Motorwelle an den Lamellenblechen befestigt wird, eine niedrige relative Permeabilität aufweisen. Nach der Erfindung werden demzufolge aus Zwei-Zustands-Stahl bestehende Lamellenbleche für den Rotorkern von Permanentmagnet-Folgepol-Maschinen verwendet, um zu vermeiden, dass ein Flussverlust entlang der magnetischen Stahlwelle des Elektromotors erfolgt. Hierzu werden die aus Zwei-Zustands-Stahl bestehenden Lamellenbleche im Verbindungsbereich des Rotor-Blechpakets mit der Motorwelle lokal wärmebehandelt und entmagnetisiert. Das entmagnetisierte Material, das die magnetischen Eigenschaften von Luft aufweist, erzeugt eine Flussbarriere von dem Rotorstapel in die magnetische Stahlwelle. Demzufolge braucht erfindungsgemäß keine nichtmagnetische Welle aus rostfreiem Stahl verwendet werden und die Maschine muss auch nicht länger ausgestaltet werden, um Flussverluste zu kompensieren. Die radiale Breite der nichtmagnetischen Flussbarriere ist erfindungsgemäß bevorzugt etwa dieselbe Breite, die der magnetische Spalt des Elektromotors aufweist, oder liegt etwas darüber. Der innere Bereich, in dem die Motorwelle an den Lamellenblechen befestigt wird, weist eine niedrige relative Permeabilität auf. Dieser innere Bereich ist also erfindungsgemäß bevorzugt ein konzentrischer Ring um die Motorwelle bzw. die für diese vorgesehene Öffnung, dessen Breite der des Magnetspalts zwischen Rotor und Stator entspricht. Erfindungsgemäß umfasst der innere Bereich alle Berührungspunkte zwischen einem Lamellenblech und der Motorwelle. Dies wird erfindungsgemäß bevorzugt durch eine solche Wärmebehandlung der Lamellenbleche bzw. des Kerns erreicht, dass alle Berührungspunkte zwischen dem Lamellenblech und der Motorwelle eine niedrige relative Permeabilität aufweisen.

Korrespondierend dazu umfasst das erfindungsgemäße Verfahren zur Herstellung eines Rotors für eine elektrische Maschine, der einen Kern aufweist, der aus Lamellenblechen besteht, welche auf einer Motorwelle angeordnet sind, die Schritte:
- Fertigen der Lamellenbleche aus einem Zwei-Zustands-Stahl mit einer hohen relativen Permeabilität, und
- Durchführen einer Wärmebehandlung der Lamellenbleche in einem inneren Bereich, in dem die Motorwelle an den Lamellenblechen befestigt wird, so dass dort eine niedrige relative Permeabilität entsteht.

Die Unteransprüche zeigen bevorzugte Weiterbildungen der Erfindung.

Bei dem erfindungsgemäßen Rotor weisen die Lamellenbleche bevorzugt in einem äußeren Bereich außerhalb des inneren Bereichs eine hohe relative Permeabilität auf. Diese liegt weiter bevorzugt bei 900 oder darüber. Die niedrige relative Permeabilität liegt erfindungsgemäß bevorzugt bei ungefähr 1.

Erfindungsgemäß umfasst die Wärmebehandlung bevorzugt ein Erwärmen des inneren Bereichs auf Temperaturen von oberhalb von 1100°C. Dieses Erwärmen des inneren Bereichs erfolgt erfindungsgemäß weiter bevorzugt mittels des Verfahrens eines Plasma-Schweißkopfs oder einem ähnlichen Verfahren über den inneren Bereich.

Der erfindungsgemäße Rotor ist bevorzugt an eine bürstenlose Permanentmagnet-Folgepol-Maschine angepasst.

### Kurze Beschreibung der Zeichnung(en)

Nachfolgend werden Ausführungsbeispiele der Erfindung unter Bezugnahme auf die begleitende Zeichnung beschrieben. In der Zeichnung ist:
- Figur 1: ein Querschnitt einer kleinen bürstenlosen Permanentmagnet-Folgepol-Maschine für eine Pumpe nach einem ersten Ausführungsbeispiel der Erfindung;
- Figur 2: eine Darstellung des zweidimensionalen Magnetfeldes der in Figur 1 gezeigten Maschine, wenn keine Anregung der Phasenwicklungen erfolgt;
- Figur 3: eine schematische zweidimensionale Darstellung des in dem Rotor bestehenden Magnetfeldes gemäß Figur 2;
- Figur 4: eine schematische dreidimensionale Darstellung des in dem Rotor bestehenden Magnetfeldes gemäß Figur 2;
- Figur 5: ein Vergleich der elektromotorischen Kraft eines herkömmlichen Elektromotors und eines erfindungsgemäßen Elektromotors;
- Figur 6: ein Vergleich des Drehmoments zur Drehzahl und des Antriebswirkungsgrads zur Drehzahl eines herkömmlichen Elektromotors mit einem erfindungsgemäßen Elektromotor;
- Figur 7: verschiedene Anordnungen von Pressverbindungen zwischen dem Rotorstapel und der Motorwelle gemäß der Erfindung;
- Figur 8: ein Querschnitt einer herkömmlichen kleinen bürstenlosen Permanentmagnet-Folgepol-Maschine;
- Figur 9: eine Darstellung des zweidimensionalen Magnetfelds des in Figur 8 gezeigten Elektromotors, wenn keine Anregung der Phasenwicklungen erfolgt;
- Figur 10: eine schematische zweidimensionale Darstellung des in dem Rotor bestehenden Magnetfelds gemäß Figur 8; und
- Figur 11: eine schematische dreidimensionale Darstellung des in dem Rotor bestehenden Magnetfeldes gemäß Figur 8.

### Ausführungsform(en) der Erfindung

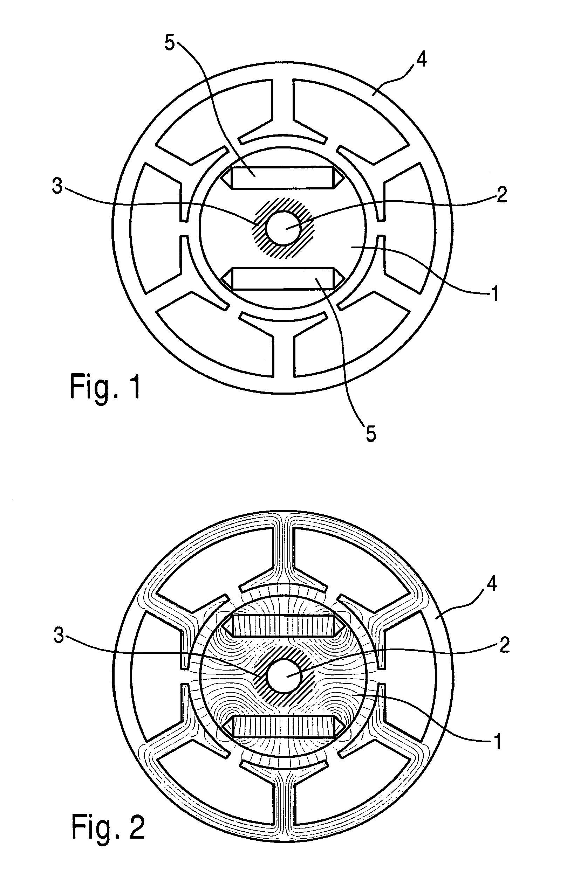

Figur 1 zeigt einen Querschnitt einer bürstenlosen Permanentmagnet-Folgepol-Maschine als eine bevorzugte Ausführungsform der Erfindung. Diese hat grundsätzlich denselben Aufbau, wie er in Figur 8 für einen herkömmlichen Elektromotor dieses Typs gezeigt ist. Erfindungsgemäß wird für die Lamellenbleche 1 des Rotors ein Zwei-Zustands-Stahl verwendet. Diese Lamellenbleche 1 sind in dem Bereich 3 um die Motorwelle 2 wärmebehandelt und entmagnetisiert, um einen inneren Bereich 3 zu erzeugen, der nicht magnetisch ist und sich effektiv wie Luft verhält. Diese nichtmagnetische Flussbarriere ist in der Figur als schraffierter Ring 3 gezeigt, der die Motorwelle 2 komplett umfasst, d.h., 360°. Die radiale Breite dieser Flussbarriere ist erfindungsgemäß bevorzugt gleich oder etwas größer wie die Spaltbreite zwischen Rotor und Stator, d.h., so groß oder etwas größer (bis zu 50 %), wie die Differenz zwischen dem Außendurchmesser der Lamellenbleche 1 des Rotors und dem Innendurchmesser der Lamellenbleche 4 des Stators.

Die Entmagnetisierung erfolgt erfindungsgemäß bevorzugt durch eine Wärmebehandlung, bei der der innere Bereich 3 auf Temperaturen von oberhalb 1100°C erwärmt wird. Dies erfolgt bevorzugt mittels des Verfahrens eines Plasmaschweißkopfs oder einem ähnlichen Verfahren über oder entlang des inneren Bereichs 3, wobei dies erfolgen kann, wenn die Lamellenbleche 1 noch nicht zu dem Rotorpaket gestapelt sind oder auch erst, wenn das Rotorpaket bereits gestapelt ist, indem der Plasmaschweißkopf durch den für die Motorwelle 2 vorgesehenen Bereich hindurchgefahren wird.

Figur 2 zeigt das zweidimensionale Magnetfeld in dem nicht-angeregten Elektromotor, das mittels des Verfahrens der finiten Elemente berechnet wurde. Aus der Figur kann klar erkannt werden, dass in den inneren Bereich 3 kein magnetischer Fluss eintritt. Demzufolge kann hier auch bei Verwendung einer magnetischen Stahlwelle kein Streufluss in der Motorwelle auftreten, wodurch kein Flussverlust entstehen kann.

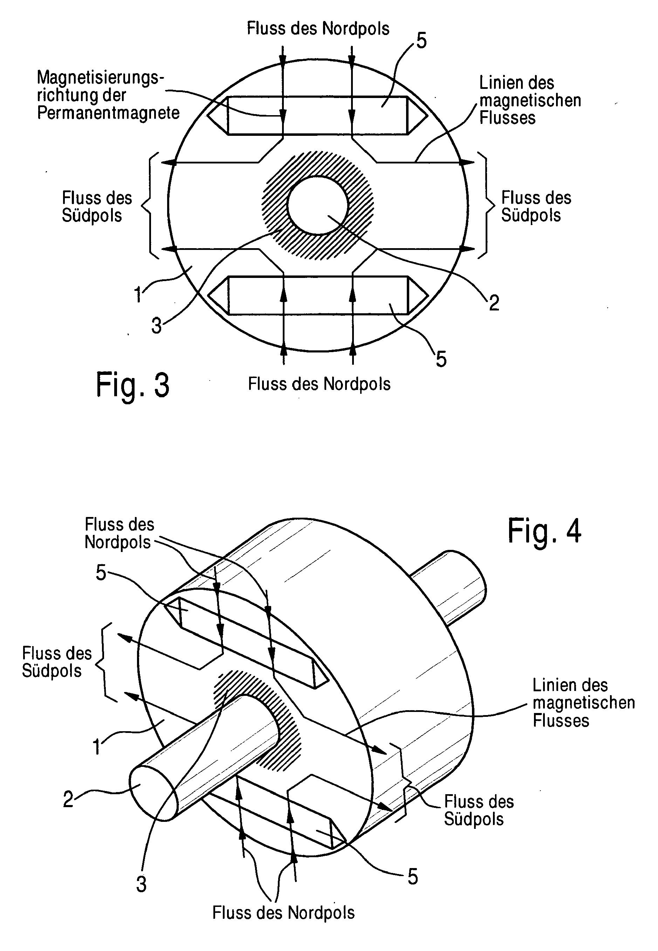

Figur 3 zeigt eine schematische zweidimensionale Darstellung des in dem Rotor bestehenden Magnetfeldes gemäß der Figur 2. Die Linien des magnetischen Flusses, die das vierpolige Feld erzeugen, können in der Figur klar erkannt werden, wobei deutlich ist, dass diese nicht in den inneren Bereich 3 eintreten, der als konzentrischer Ring um die Motorwelle 2 ausgestaltet ist.

Figur 4 zeigt eine schematische dreidimensionale Darstellung des Magnetfeldes in dem Rotor. Auch hier ist ersichtlich, dass kein magnetischer Fluss in die Motorwelle 2 eintritt, weswegen keine Verluste des Spaltflusses und des Drehmoments bestehen und keine Reduzierung des Verhältnisses von Leistung zu Gewicht des Elektromotors erfolgt.

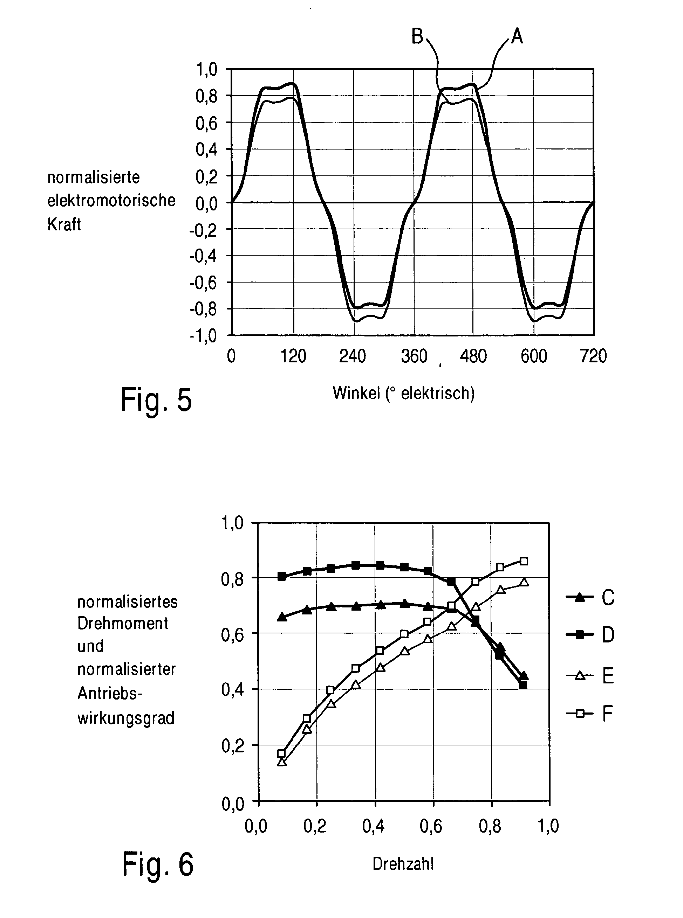

In Figur 5 ist ein Vergleich der normalisierten elektromotorischen Kraft des in Figur 8 gezeigten herkömmlichen Elektromotors zu dem in Figur 1 gezeigten Elektromotor nach der Erfindung gezeigt. Hierbei entspricht die Kurve A dem erfindungsgemäß ausgestalteten Elektromotor und die Kurve B dem herkömmlich ausgestalteten Elektromotor. Es ist deutlich zu erkennen, dass der erfindungsgemäße Elektromotor eine höhere normalisierte elektromotorische Kraft erzeugt. Demzufolge weist dieser auch einen höheren magnetischen Fluss auf. Die Differenz zwischen den Kurven A und B entsteht aufgrund von magnetischem Streufluss, der durch die Motorwelle 2 des herkömmlichen Elektromotors verloren geht.

In Figur 6 sind das normalisierte Drehmoment und der normalisierte Antriebswirkungsgrad der beiden in den Figuren 8 und 1 gezeigten Elektromotoren gegenüber der normalisierten Drehzahl aufgetragen. Hierbei ist die Kurve C das Drehmoment des herkömmlichen Motors und die Kurve D das Drehmoment des erfindungsgemäßen Motors, die Kurve E der Antriebswirkungsgrad des herkömmlichen Motors und die Kurve F der Antriebswirkungsgrad des erfindungsgemäßen Motors. Hier beinhaltet der Antriebswirkungsgrad jeweils den Elektromotor plus der Leistungs- und Steuerungselektronik. Aus der Figur 6 können das höhere Drehmoment und der höhere Antriebswirkungsgrad des erfindungsgemäßen Motors klar erkannt werden.

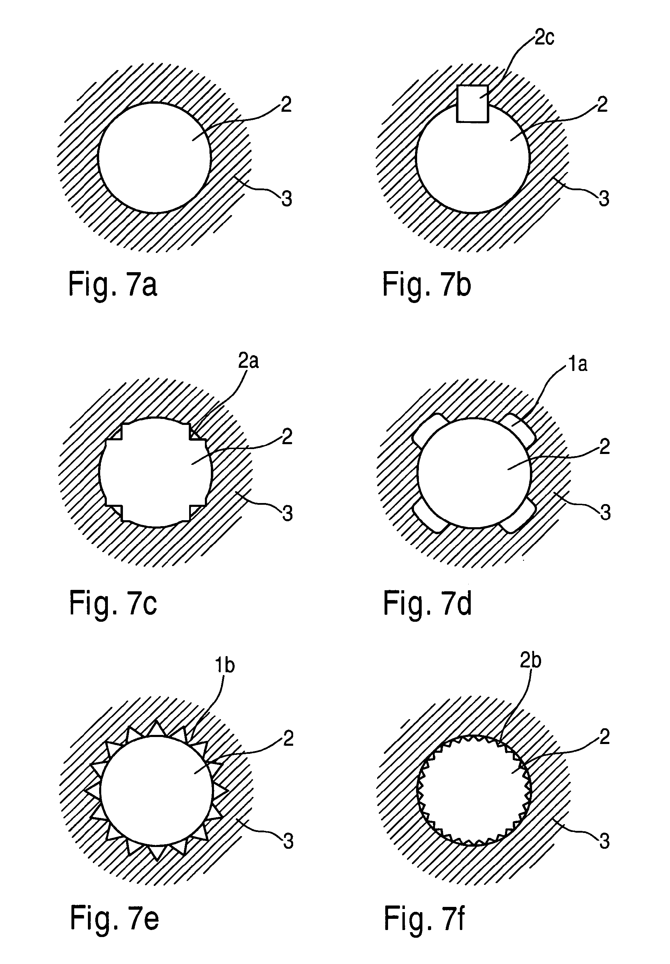

Die Figur 7 zeigt verschiedene Verbindungsarten des Rotorstapels mit der Motorwelle 2, die gemeinhin bei kleinen Elektromotoren verwendet werden. Der Rotorstapel aus dem Zwei-Zustands-Lamellenblech wurde in dem inneren Bereich 3 jedes Lamellenblechs, also auch in dem inneren Bereich des Rotorstapels, wärmebehandelt und entmagnetisiert, um einen nichtmagnetischen Bereich zu erzeugen, der sich effektiv wie Luft verhält, um eine Flussbarriere zu erzeugen, damit der magnetische Fluss nicht in die Motorwelle 2 eintritt. Figur 7a zeigt einen Schaft mit einfachem runden Querschnitt, der mit dem Rotorstapel mittels einer Presspassung verbunden ist. Figur 7b zeigt eine Motorwelle 2 mit einer Keilnut und einem darin eingesetzten Keil 2c, der ebenfalls in eine Nut des Rotorstapels eingreift, wodurch ein Verdrehen der eingesetzten Motorwelle 2 in Bezug auf den Rotorstapel verhindert wird. Die Figur 7c zeigt eine mit Einkerbungen 2a versehene Motorwelle, durch die bei Einpassung in den Rotorstapel ein gegenseitiges Verdrehen verhindert wird. Die Figur 7d zeigt eine Motorwelle mit rundem Querschnitt, der in einen Rotorstapel eingesetzt ist, bei dem die Lamellen Schlitze 1a aufweisen, die über den gesamten Stapel parallel zur Motorwelle 2 laufen, wodurch eine einfachere Presspassung ermöglicht wird, die eine Verdrehung zwischen Motorwelle 2 und dem Rotorstapel verhindert. Die Anzahl der Schlitze ist größer gleich 2. Figur 7e zeigt eine Motorwelle mit rundem Querschnitt, die in einen Rotorstapel mit gezahnten Lamellen eingesetzt ist. Hierdurch ergibt sich derselbe Effekt, wie in Bezug auf Figur 7d beschrieben. Die Anzahl der Zähne ist größer gleich 3. Die Figur 7f zeigt eine gerändelte Motorwelle 2 mit Rändelungen 2b, die in einen Rotorstapel eingesetzt ist, bei dem die Lamellenbleche jeweils eine kreisrunde Ausstanzung zur Aufnahme der gerändelten Motorwelle 2 aufweisen.

Den Fachleuten auf dem Gebiet von kleinen Elektromotoren ist ersichtlich und bekannt, dass auch andere Verfahren zur Verbindung von Motorwelle und Rotorstapel bestehen, und dass diese auch bei dem erfindungsgemäßen Rotorstapel Anwendung finden.

Die Erfindung kann bei beliebigen Permanentmagnet-Folgepol-Maschinen mit radialem Feld eingesetzt werden.

## Patentansprüche

1. Rotor für eine elektrische Maschine, der einen Kern aufweist, der aus Lamellenblechen (1) besteht, welche auf einer Motorwelle (2) angeordnet sind, wobei die Lamellenbleche (1) des Kerns aus einem Zwei-Zustands-Stahl bestehen und in einem inneren Bereich (3), in dem die Motorwelle (2) an den Lamellenblechen (1) befestigt wird, eine niedrige relative Permeabilität aufweisen, **dadurch gekennzeichnet, dass** der innere Bereich (3) alle Berührungspunkte zwischen einem Lamellenblech (1) und der Motorwelle (2) umfasst.

2. Rotor nach Anspruch 1, **dadurch gekennzeichnet, dass** die Lamellenbleche (1) in einem äußeren Bereich außerhalb des inneren Bereichs (3) eine hohe relative Permeabilität aufweisen.

3. Rotor nach Anspruch 1 oder 2, **dadurch gekennzeichnet, dass** die hohe relative Permeabilität bei 900 oder darüber liegt.

4. Rotor nach einem der vorstehenden Ansprüche 1 bis 3, **dadurch gekennzeichnet, dass** die niedrige relative Permeabilität bei ungefähr 1 liegt.

5. Rotor nach einem der vorstehenden Ansprüche 1 bis 4, **dadurch gekennzeichnet, dass** er an eine bürstenlose Permanentmagnet-Folgepol-Maschine angepasst ist.

6. Verfahren zur Herstellung eines Rotors für eine elektrische Maschine, der einen Kern aufweist, der aus Lamellenblechen (1) besteht, welche auf einer Motorwelle (2) angeordnet sind, **gekennzeichnet durch** die Schritte:
- Fertigen der Lamellenbleche (1) aus einem Zwei-Zustands-Stahl mit einer hohen relativen Permeabilität, und
- Durchführen einer Wärmebehandlung der Lamellenbleche (1) in einem inneren Bereich (3), in dem die Motorwelle (2) an den Lamellenblechen (1) befestigt wird, so dass dort eine niedrige relative Permeabilität entsteht.
- wobei die Lamellenbleche (1) bzw. der Kern jeweils so wärmebehandelt werden, dass alle Berührungspunkte zwischen einem Lamellenblech (1) und der Motorwelle (2) eine niedrige relative Permeabilität aufweisen.

7. Verfahren nach Anspruch 6, **dadurch gekennzeichnet, dass** die hohe relative Permeabilität bei 900 oder darüber liegt.

8. Verfahren nach Anspruch 6 oder 7, **dadurch gekennzeichnet, dass** die niedrige relative Permeabilität bei ungefähr 1 liegt.

9. Verfahren nach einem der vorstehenden Ansprüche 6 bis 8, **dadurch gekennzeichnet, dass** die Wärmebehandlung ein Erwärmen des inneren Bereichs (3) auf Temperaturen von oberhalb von 1100°C umfasst.

10. Verfahren nach Anspruch 9, **dadurch gekennzeichnet, dass** das Erwärmen des inneren Bereichs (3) mittels des Verfahrens eines Plasma-Schweißkopfs oder einem ähnlichen Verfahren über den inneren Bereich (3) erfolgt.

11. Elektrische Maschine, insbesondere ein bürstenloser Elektromotor, **gekennzeichnet durch** einen Rotor nach einem der Ansprüche 1 bis 5.

## Claims

1. Rotor for an electrical machine, which rotor has a core which comprises sheet-metal laminations (1) which are arranged on a motor shaft (2), with the sheet-metal laminations (1) of the core being composed of a two-state steel and having a low relative permeability in an inner region (3) in which the motor shaft (2) is attached to the sheet-metal laminations (1), **characterized in that** the inner region (3) comprises all the contact points between a sheet-metal lamination (1) and the motor shaft (2).

2. Rotor according to Claim 1, **characterized in that** the sheet-metal laminations (1) have a high relative permeability in an outer region outside the inner region (3).

3. Rotor according to Claim 1 or 2, **characterized in that** the high relative permeability is 900 or above.

4. Rotor according to one of the preceding Claims 1 to 3, **characterized in that** the low relative permeability is approximately 1.

5. Rotor according to one of the preceding Claims 1 to 4, **characterized in that** it is matched to a brushless permanent-magnet consequent-pole machine.

6. Method for producing a rotor for an electrical machine, which rotor has a core which comprises sheet-metal laminations (1) which are arranged on a motor shaft (2), **characterized by** the steps of:
- manufacturing the sheet-metal laminations (1) from a two-state steel with a high relative permeability, and
- heat-treating the sheet-metal laminations (1) in an inner region (3) in which the motor shaft (2) is attached to the sheet-metal laminations (1), so that a low relative permeability is produced there,
- with the sheet-metal laminations (1) or the core in each case being heat-treated such that all the contact points between a sheet-metal lamination (1) and the motor shaft (2) have a low relative permeability.

7. Method according to Claim 6, **characterized in that** the high relative permeability is 900 or above.

8. Method according to Claim 6 or 7, **characterized in that** the low relative permeability is approximately 1.

9. Method according to one of the preceding Claims 6 to 8, **characterized in that** the heat treatment comprises heating the inner region (3) to temperatures of above 1100°C.

10. Method according to Claim 9, **characterized in that** the inner region (3) is heated by means of the movement of a plasma welding head or a similar movement over the inner region (3).

11. Electrical machine, in particular a brushless electric motor, **characterized by** a rotor according to one of Claims 1 to 5.

## Revendications

1. Rotor pour machine électrique, le rotor présentant un noyau constitué de tôles (1) en lamelle disposées sur un arbre moteur (2), les tôles (1) en lamelle du noyau étant constituées d'un acier à deux états et présentant une basse perméabilité relative dans une partie intérieure (3) dans laquelle l'arbre (2) du moteur est fixé sur les tôles (1) en lamelle,
**caractérisé en ce que**
la partie intérieure (3) comporte tous les points de contact entre une tôle (1) en lamelle et l'arbre (2) du moteur.

2. Rotor selon la revendication 1, **caractérisé en ce que** les tôles (1) en lamelle présentent une haute perméabilité relative élevée dans une partie extérieure située à l'extérieur de la partie intérieure (3).

3. Rotor selon les revendications 1 ou 2, **caractérisé en ce que** la haute perméabilité relative est de 900 ou davantage.

4. Rotor selon l'une des revendications 1 à 3 qui précèdent, **caractérisé en ce que** la basse perméabilité relative est d'environ 1.

5. Rotor selon l'une des revendications 1 à 4, **caractérisé en ce qu'**il est adapté à une machine sans balais à aimant permanent et pôles suiveurs.

6. Procédé de fabrication d'un rotor pour machine électrique, lequel rotor présente un noyau constitué de tôles (1) en lamelle disposées sur l'arbre (2) d'un moteur, le procédé étant **caractérisé par** les étapes qui consistent à :
- fabriquer les tôles (1) en lamelle en un acier à deux états et haute perméabilité relative et
- faire subir un traitement thermique à la partie intérieure (3) des tôles (1) en lamelle dans laquelle l'arbre (2) du moteur est fixé sur les tôles (1) en lamelle, de manière à y obtenir une basse perméabilité relative,
les tôles (1) en lamelle ou le noyau étant traités thermiquement de telle sorte que tous les points de contact entre une tôle (1) en lamelle et l'arbre (2) du moteur présentent une basse perméabilité relative.

7. Procédé selon la revendication 6, **caractérisé en ce que** la haute perméabilité relative est de 900 ou davantage.

8. Procédé selon les revendications 6 ou 7, **caractérisé en ce que** la basse perméabilité relative est d'environ 1.

9. Procédé selon l'une des revendications 6 à 8 qui précèdent, **caractérisé en ce que** le traitement thermique comporte un échauffement de la partie intérieure (3) à une température supérieure à 1100°C.

10. Procédé selon la revendication 9, **caractérisé en ce que** l'échauffement de la partie intérieure (3) s'effectue par traitement à l'aide d'une tête de soudage au plasma ou traitement similaire de la partie intérieure (3).

11. Machine électrique, en particulier moteur électrique sans balais, **caractérisée par** un rotor selon l'une des revendications 1 à 5.
